# EUROPEAN PATENT SPECIFICATION

(11) **EP 3 262 946 B1**
(45) Date of publication and mention of the grant of the patent: **18.12.2019**
(21) Application number: 16755648.9
(22) Date of filing: 25.02.2016
(51) Int. Cl.: A23C 19/04, A23C 19/05, A23C 19/06, A23C 19/032

(54) **CHEESE PRODUCTION METHOD AND PREPARATION FOR CHEESE REFORMULATION**
KÄSEHERSTELLUNGSVERFAHREN UND PRÄPARAT ZUR NEUFORMULIERUNG VON KÄSE
PROCÉDÉ DE PRODUCTION DE FROMAGE ET PRÉPARATION DESTINÉE À LA REFORMULATION DU FROMAGE

(30) Priority: 26.02.2015 JP 2015036906
(43) Date of publication of application: 03.01.2018
(73) Proprietor: Ajinomoto Co., Inc., Tokyo 104-8315 (JP)
(72) Inventor: SATO, Hiroaki, Kawasaki-shi Kanagawa 210-8681 (JP)
(74) Representative: Strehl Schübel-Hopf & Partner
(86) International application number: PCT/JP2016/055687
(87) International publication number: WO 2016/136904

(56) References cited:
- EP-A1- 1 416 803
- WO-A1-2014/042279
- FR-A1- 2 357 183
- JP-A- 2007 022 989
- JP-A- 2012 516 319
- JP-A- 2014 516 576
- TAMOTSU IMADE ET AL.: 'Effects of calcium and pH on the hardness of rennet curd of high- temperature-heated milk' TECHNICAL BULLETIN OF FACULTY OF AGRICULTURE vol. 38, March 1987, pages 17 - 23, XP009505863

## Description

### Technical Field

The present invention relates to a method for producing cheese. A preparation for reforming cheese is also disclosed.

### Background Art

Cheese is classified into natural cheese and processed cheese. Natural cheese is further classified into non-mature cheese (fresh cheese) and mature cheese.

Common methods for producing cheese are exemplified below. First, a milk clotting enzyme and so forth are added to a milk raw material such as cow milk to form aggregates (cheese curd). Then, by separating the cheese curd from milk serum (whey) and collecting them, fresh cheese can be obtained. Further, by maturing the fresh cheese, mature cheese can be obtained. By heat-melting the natural cheese obtained as described above (fresh cheese or mature cheese), processed cheese can be produced. Especially in the case of fresh cheese, as water retention increases, the yield also increases. However, cheese having unduly high water content generally shows low physical strength and mouthfeel unfavorable as cheese. Therefore, from the aspects of palatability and economy, cheese showing high water retention ability, but also showing favorable mouthfeel as cheese is desired.

In common cheese production methods, cheese is produced from raw material milk that is not subjected to any heat sterilization process, low temperature-sterilized milk treated at 63 to 68°C for about 30 minutes, or high temperature-sterilized milk treated at 71 to 75°C for about 15 seconds as a raw material. It is considered that, if ultra high temperature-sterilized milk heat-treated at a temperature of 120°C or higher is used as a raw material, a cheese curd is not formed, and cheese cannot be produced. However, shelf lives of low temperature-sterilized milk and high temperature-sterilized milk are as short as about ten days, and therefore there has been a problem that cheese cannot be produced in a place remote from a dairy area where it is difficult to supply of raw material milk. On the other hand, if ultra high temperature-sterilized milk is aseptically packaged, it can be stored for such a long period of time as about 6 months at an ordinary temperature. Therefore, if cheese can be produced by using ultra high temperature-sterilized milk as the raw material, there is provided a remarkable advantage that cheese can be produced in a place remote from a dairy area where it is difficult to supply of raw material milk, and so forth.

Non-patent document 1 discloses a method for producing cheese comprising adding hydrochloric acid to skimmed milk heat-treated at 80 to 130°C. However, Non-patent document 1 does not disclose use of an oxidizing agent or a metallic ingredient.

Patent document 1 discloses a method for producing cheese, which uses a protein crosslinking enzyme such as glucose oxidase. However, Patent document 1 does not disclose use of a metallic ingredient. Patent document 1 does not include any example of production of cheese by using ultra high temperature-sterilized milk as a raw material, either.

Patent document 2 discloses a method for producing cheese containing lactobionic acid, which comprises the step of preparing a liquid cheese mix containing milk ingredients, lactose, and an oxidase, and catalytically oxidizing at least a part of the lactose with the oxidase to generate lactobionic acid in the cheese mix, and the step of clotting the cheese mix to obtain a cheese product. However, Patent document 2 does not disclose use of a metallic ingredient, or production of cheese using ultra high temperature-sterilized milk as a raw material.

Patent document 3 discloses a method for producing cheese, which comprises adding calcium chloride to ultra high temperature-sterilized milk. However, Patent document 3 does not disclose use of an oxidizing agent.

Patent document 4 discloses a method for producing a processed marine product, which comprises adding a glucose oxidase and a metal-containing yeast to a marine product raw material, and an enzyme preparation for reforming a processed marine product, which contains a glucose oxidase and a metal-containing yeast. However, Patent document 4 does not disclose method for producing cheese, or preparation for reforming cheese.

### Prior art references

### Patent documents

Patent document 1: Japanese Patent Laid-open (Kohyo) No. 2014-516576
Patent document 2: Japanese Patent No. 4249491
Patent document 3: FR 2357183 A1
Patent document 4: WO2014/0042279A1

### Non-patent document

Non-patent document 1: Characteristics of Mozzarella Cheese Made by Direct Acidification from Ultra-high-Temperature Processed Milk, H.W. Schafer et al., April 1975, Volume 58, Issue 4, Pages 494-501

### Summary of the Invention

### Object to be Achieved by the Invention

An object of the present invention is to provide a method for producing cheese.

### Means for Achieving the Object

The inventors of the present invention conducted various researches, as a result, found that by using an oxidizing agent such as glucose oxidase and an iron-containing yeast in combination, cheese of good quality can be produced from a heat-treated milk raw material such as ultra high temperature-sterilized milk, and accomplished the present invention.

The present invention can be embodied, for example, as follows.
[1] A method for producing cheese, the method comprising:
   treating a food raw material containing a milk protein with an oxidase and an iron containing yeast.
[2] The method mentioned above, wherein the food raw material consists of one or more kinds of raw materials selected from whole milk, skimmed milk, partially skimmed milk, milk serum, cream, buttermilk, a processed product thereof, and an ingredient-adjusted product thereof.
[3] The method mentioned above, wherein the oxidase consists of one or more kinds of enzymes selected from a lactose oxidase and a glucose oxidase.
[4] The method mentioned above, wherein 0.05 to 200 U of the oxidase is added per 1 g of the milk protein.
[5] The method mentioned above, wherein 0.00003 to 0.03 g of the metal-containing yeast in terms of dry weight is added per 1 g of the food raw material.
[6] The method mentioned above, which further comprises processing the food raw material with a transglutaminase and/or a calcium salt.
[7] The method mentioned above, wherein the food raw material is a heat-treated food raw material containing a milk protein.
[8] The method mentioned above, wherein the food raw material has been heat-treated at a temperature of 120°C or higher for 0.5 to 15 seconds.
[9] Disclosed is a preparation for reforming cheese, the preparation containing an oxidase and a metallic ingredient,
   wherein the metallic ingredient consists of one or more kinds of ingredients selected from a metal-containing yeast and a metal-bound lactoferrin.
[10] The preparation mentioned above, wherein the oxidase consists of one or more kinds of enzymes selected from a lactose oxidase and a glucose oxidase.
[11] The preparation mentioned above, which contains 0.0000000015 to 1.5 g of the metal-containing yeast in terms of dry weight per 1 U of the oxidase contained in the preparation.
[12] The preparation mentioned above, which further contains a transglutaminase and/or a calcium salt.
[13] The preparation mentioned above, which is used for producing cheese from a heat-treated food raw material containing a milk protein.

### Brief Description of the Drawings

[Fig. 1] A graph showing the results of the measurement of breaking strength of cheese.
[Fig. 2] A graph showing the results of the measurement of yield of cheese.
[Fig. 3] Drawings showing appearance of cheese (photographs).

### Modes for Carrying out the Invention

Hereafter, the present invention will be explained in detail. The following explanations may be applied to the present invention independently or in combination.

### <1> Cheese

In the present invention, type of the cheese is not particularly limited. The cheese may be natural cheese or processed cheese. The cheese may be non-mature cheese (fresh cheese) or mature cheese. The cheese may be any of soft cheese, semi-hard cheese, and hard to super-hard cheese (hard cheese). Examples of the natural cheese include chevre cheeses (goat's milk cheeses) such as Sainte Maure de Touraine, Crottin de Chavignol, and Valençay, fresh cheeses such as cottage, cream cheese, string cheese, mozzarella, and ricotta, wash cheeses such as Pont-l'Évêque, Livarot, and Limberger, semi-hard cheeses such as Gouda and Samsoe, hard cheeses such as Emmental, Comté, and Parmigiano Reggiano, bloomy rind cheeses such as camembert and Brie, and blue cheeses such as Gorgonzola, Stilton, and Roquefort, but examples are not limited to these. Examples of the processed cheese include cheese produced by heat-melting these natural cheeses.

### <2> Preparation

The preparation contains an oxidizing agent and an iron containing yeast for reforming cheese. The preparation may or may not further contain a transglutaminase. The preparation may or may not further contain a calcium ingredient. Namely, the preparation of the present invention may be, for example, a preparation containing an oxidizing agent, an iron containing yeast, and a transglutaminase, a preparation containing an oxidizing agent, an iron containing yeast, and a calcium ingredient, or a preparation containing an oxidizing agent, an iron containing yeast, a transglutaminase, and a calcium ingredient. In the present invention, the oxidizing agent, iron containing yeast, transglutaminase, and calcium ingredient are generically referred to as "active ingredients" (the transglutaminase and calcium ingredient are included only when they are used (contained or added)).

The preparation can be used in order to reform cheese. Specifically, by processing a food raw material containing a milk protein (also referred to as "milk raw material") with the preparation to produce cheese, reformed cheese can be obtained. That is, the "preparation for reforming cheese" may be specifically an auxiliary agent for cheese production. The "reforming" of cheese is not limited to such a case that although cheese can be produced without using the active ingredients, reformed cheese can be produced by using the active ingredients compared with a case of not using the active ingredients, but also includes such a case that although cheese cannot be produced without using the active ingredients, it becomes possible to produce cheese by using the active ingredients. Examples of "reforming" of cheese include improvement in yield, improvement in breaking strength, improvement in milk flavor, and improvement in moldability. The "yield" is a ratio of the weight of cheese to the weight of the milk raw material. Improvement in yield may be provided by, for example, improvement in water retention, improvement in amount of milk proteins, or combination of these. The "breaking strength" is a physical property used as an index of "hardness" of cheese at the time of biting it.

Examples of the oxidizing agent include oxidases. The oxidase is not particularly limited so long as an oxidase that can catalyze an oxidation reaction is chosen. The oxidase may be, for example, one that directly or indirectly contributes to oxidization of the milk raw material as the object of the treatment. Examples of the oxidase include lactose oxidase, glucose oxidase, ascorbate oxidase, phenol oxidase, lysyl oxidase, and so forth. Among these, an enzyme selected from a lactose oxidase and a glucose oxidase is preferred. Lactose oxidase is an enzyme that catalyzes the reaction that generates lactobionic acid and hydrogen peroxide by using lactose, oxygen, and water as substrates. Examples of the lactose oxidase include the carbohydrate oxidase described in Japanese Patent Laid-open (Kohyo) No. 2007-535331. Glucose oxidase is an enzyme that catalyzes the reaction that generates gluconolactone (gluconolactone is nonenzymatically hydrolyzed into gluconic acid), and hydrogen peroxide by using glucose, oxygen, and water as substrates. Ascorbate oxidase is an enzyme that catalyzes the reaction that generates dehydroascorbic acid and water by using ascorbic acid and oxygen as substrates. Phenol oxidase is a generic term for referring to an enzyme that catalyzes the reaction of oxidizing a phenol such as monophenol, diphenol, and polyphenol. The phenol oxidase is also referred to as tyrosinase, laccase, or polyphenol oxidase. For example, hydrogen peroxide generated by the catalytic reaction with the lactose oxidase or glucose oxidase can oxidize SH groups in proteins to promote generation of SS bonds (disulfide bonds) and form crosslinking structures in the proteins. Origin of the oxidase is not particularly limited. The oxidase may be one derived from any of microorganism, animal, plant, and so forth. As the oxidase, a homologue or artificially modified enzyme of a known oxidase may also be used. For example, glucose oxidases of various origins such as those of microorganisms including *Aspergillus* fungi, and of plants are known, and any of these glucose oxidases may be used. The glucose oxidase may also be a recombinant enzyme. Specific examples of the oxidase include the glucose oxidase derived from microorganism marketed from Shin Nippon Kagaku Industry with a trade name of "Sumizyme PGO". The oxidase may or may not contain an ingredient other than oxidase. The oxidase may contain, for example, another enzyme. For example, many of marketed glucose oxidase preparations contain catalase, and as the oxidase, such a mixture of an oxidase and another enzyme may also be used. As the oxidase, one kind of oxidase may be used, or two or more kinds or oxidases may be used in combination.

Iron containing yeast can be obtained by adding iron to yeast at the time of culture thereof so that the metal is incorporated into yeast cells, but the iron containing yeast is not limited to iron ccontaining yeasts of this type. The iron contained in the metal-containing yeast may also be a iron containing substance substance such as an iron salt. The iron or iron salt contained in the metal-containing yeast may be in the form of any of simple substance, salt, ion, and so forth. The contained amount of iron in the iron-containing yeast used in the present invention may be, for example, 0.001 to 0.1 g, preferably 0.01 to 0.08 g, more preferably 0.04 to 0.06 g, per 1 g of dry weight of yeast. The iron-containing yeast may be in the form of any of powder, paste, suspension, and so forth. The iron-containing yeast may consist of live yeast cells as they are, or may be those sterilized. Type of the yeast is not particularly limited. Examples of the yeast include yeasts belonging to the genus *Saccharomyces* such as *Saccharomyces cerevisiae,* yeasts belonging to the genus *Schizosaccharomyces* such as *Schizosaccharomyces pombe,* and yeasts belonging to the genus *Candida* such as *Candida utilis.* Among these, yeasts belonging to the genus *Saccharomyces* or *Candida* are preferred. Specific examples of the metal-containing yeast include iron-containing yeast marketed by Sceti with the category name of "metal-containing yeast".

The "lactoferrin" is a lactoferrin bound with a metal (metal-bound lactoferrin). Specific examples of the metal-bound lactoferrin include lactoferrin bound with iron (iron-lactoferrin).

Transglutaminase is an enzyme that catalyzes the reaction of binding a glutamine residue and a lysine residue in proteins to crosslink the proteins. In particular, by using a transglutaminase in combination, more rigid gel is formed, and it is expected that the breaking strength and yield are improved. Origin of the transglutaminase is not particularly limited. The transglutaminase may be one derived from any of microorganism, animal, plant, and so forth. As the transglutaminase, a homologue or artificially modified enzyme of a known transglutaminase may also be used. The transglutaminase may also be a recombinant enzyme.

Examples of the calcium ingredient include calcium and calcium-containing substances. Calcium may be in the form of any of simple substance, ion, and so forth. Examples of the calcium-containing substance include calcium salts and calcium-containing yeasts. Examples of the calcium salt include calcium chloride, calcium citrate, calcium phosphate, calcium sulfate, calcium carbonate, calcium hydroxide, calcium oxide, calcined calcium, and so forth. The calcium salt may be in the form of any of salt, ion, and so forth. As the calcium ingredient, among these, a calcium salt is preferred, and calcium chloride is more preferred. As the calcium ingredient, one kind of the ingredient may be used, or two or more kinds of the ingredients may be used in combination.

The preparation of the present invention may contain an ingredient other than the active ingredients (henceforth referred to as "other ingredient"), so long as the effect of reforming cheese can be obtained. As the other ingredient, for example, those used in seasonings, foods, drinks, or drugs by mixing can be used. Examples of the other ingredient include excipients such as lactose, glucose, dextrin, polysaccharide thickeners, starch, modified starch, and reduced malt sugar, proteins such as plant proteins, gluten, albumen, gelatin, and casein, seasonings such as sodium glutamate, animal extracts, fish extracts, protein hydrolysates, and protein partial decomposition products, alkali agents (pH adjustors) such as sodium carbonate and potassium carbonate, chelating agent such as gluconic acid and citric acid, oxidizing or reducing agent such as sodium ascorbate, glutathione, and cysteine, and other food additives such as alginic acid, brine, fat or oil, dye, acidulant, and perfume.

The preparation of the present invention may contain, for example, a substrate of the oxidase as the other ingredient. Examples of the substrate of the oxidase include lactose, which is the substrate of lactose oxidase, glucose, which is the substrate of glucose oxidase, ascorbic acid, which is the substrate of ascorbate oxidase, and phenols, which are the substrates of phenol oxidase. A substrate that can form a salt may be used in the form of salt. That is, the term "substrate" may mean a substrate as a free compound, a salt thereof, or a mixture of them, unless otherwise indicated. Examples of the salt include sodium salt and potassium salt. The preparation of the present invention may contain the oxidase and a substrate thereof in combination. That is, for example, the preparation of the present invention may contain lactose oxidase and lactose, glucose oxidase and glucose, ascorbate oxidase and ascorbic acid, or phenol oxidase and a phenol. Alternatively, the preparation of the present invention not containing a certain oxidase may contain a substrate thereof. That is, for example, the preparation of the present invention not containing glucose oxidase may contain glucose.

The preparation of the present invention may contain, for example, an ingredient effective for cheese production as the other ingredient. Examples of such an ingredient effective for cheese production include lactic acid bacteria and milk clotting enzymes.

As the other ingredient, one kind of ingredient may be used, or two or more kinds of ingredients may be used in combination. The preparation of the present invention can be produced by, for example, mixing the active ingredients with these other ingredients as required.

The preparation may be in the form of any of liquid, paste, granule, powder, and so forth.

The mixing amounts (concentrations) of the ingredients (namely, the active ingredients and other ingredient(s) as required) in the preparation are not particularly limited so long as the effect of reforming cheese can be obtained. The amounts (concentrations) of the ingredients in the preparation may be higher than 0% (w/w), and lower than 100% (w/w). The concentrations of the ingredients in the preparation can be appropriately determined according to various conditions such as types of the ingredients, amounts of the ingredients added at the time of cheese production, and amount of the preparation used at the time of cheese production.

The total contained amount (total concentration) of the active ingredients in the preparation may be higher than 0% (w/w), and lower than 100% (w/w). The total contained amount (total concentration) of the active ingredients in the preparation may be, for example, 1 ppm (w/w) or higher, 10 ppm (w/w) or higher, 100 ppm (w/w) or higher, or 1000 ppm (w/w) or higher, or 99.9% (w/w) or lower, 50% (w/w) or lower, 10% (w/w) or lower, or 1% (w/w) or lower, or within a range defined with a combination thereof.

When an oxidase such as glucose oxidase and the iron-containing yeast are used as the active ingredients, the contained amount (concentration) of the iron containing yeast in the preparation is, for example, preferably 0.0000000015 to 1.5 g, more preferably 0.00000015 to 0.015 g, in terms of dry weight per 1 U of the oxidase.

When an oxidase and a transglutaminase are used as active ingredients, the contained amount (concentration) of the transglutaminase in the preparation is, for example, preferably 0.001 to 1000 U, more preferably 0.01 to 100 U, per 1 U of the oxidase.

When an oxidase and a calcium ingredient are used as active ingredients, the contained amount (concentration) of the calcium ingredient in the preparation is, for example, preferably 0.000005 to 50 g, more preferably 0.00005 to 5 g, per 1 U of the oxidase.

The activity of the oxidase such as glucose oxidase can be measured in a conventional manner. Examples of the method for measuring the glucose oxidase activity include, for example, the following method. That is, glucose oxidase is allowed to act on glucose as a substrate in the presence of oxygen to generate hydrogen peroxide. Peroxidase is allowed to act on the generated hydrogen peroxide in the presence of aminoantipyrine and phenol to generate a quinoneimine dye. The generated quinoneimine dye is measured on the basis of absorbance at a wavelength of 500 nm, and the amount of the enzyme required to oxidize 1 µmol of glucose in 1 minute is defined as 1 U (unit). Specifically, the procedure is as follows. Glucose oxidase is dissolved in a 0.1 mol/L phosphate buffer (potassium dihydrogenphosphate, adjust to pH 7.0 with aqueous sodium hydroxide) by stirring, and the solution is diluted 50 times with a 0.1 mol/L phosphate buffer to prepare a GO solution. To an analysis cell, 2.0 mL of a buffer containing phenol (obtained by mixing Milli-Q, 1.36 g of potassium dihydrogenphosphate, 3 mL of 5% phenol test solution, and 3 mL of 5% triton X-100 solution, and adjusting the resulting mixture to pH 7.0 with aqueous sodium hydroxide, to provide a total volume of 100 mL), 500 µL of a 10% glucose solution, 500 µL of a 0.01% peroxidase solution (PO"Amano"3 (1250 U ± 250 U) is used), and 100 µL of a 0.4% 4-aminoantipyrine solution are successively added in this order, mixed by inverting the cell, and maintained at 37 ± 0.1°C for 10 minutes. To the above analysis cell, 100 µL of the GO solution is added, measurement is automatically performed at 11 time points every 30 seconds over 5 minutes, and the GO activity value is measured from the increment (inclination) between 120 seconds and 300 seconds. As the blank, a value measured by adding a 0.1 mol/L phosphate buffer instead of the GO solution in the above procedure is subtracted from the value obtained by the experiment using GO. As also for oxidases other than glucose oxidase, the amount of enzyme required for oxidizing 1 µmol of a substrate in 1 minute is defined as 1 U (unit).

The activity of transglutaminase is measured and defined by the hydroxamate method. That is, in a reaction system containing benzyloxycarbonyl-L-glutaminylglycine and hydroxylamine as substrates in a Tris buffer of pH 6.0 at a temperature of 37°C, transglutaminase is allowed to act on the substrates, the generated hydroxamic acid is made into an iron complex in the presence of trichloroacetic acid, absorbance is measured at 525 nm, the amount of hydroxamic acid is obtained by using a calibration curve, and the amount of the enzyme that produces 1 µmol of hydroxamic acid in 1 minute is defined as 1 unit (1 U) (refer to Japanese Patent Laid-open (Kokai) No. 64-27471).

The concentrations of the active ingredients in the preparation can be set so that, for example, the total concentration and contained amount ratios of the active ingredients mentioned above are satisfied. The concentrations of the active ingredients in the preparation can be set so that, for example, the addition amounts of the active ingredients are within desired ranges when cheese is produced by using the preparation. The addition amounts of the active ingredients may be, for example, within the ranges exemplified in the explanations of the method of the present invention (mentioned later).

The ingredients contained in the preparation (namely, the active ingredients and other ingredient(s) as required) may be contained in the preparation as a mixture, or they may be separately contained as each of them or as an arbitrary combination of them. For example, the preparation may be provided as a set of the oxidizing agent and the metallic ingredient separately packaged. In such a case, the ingredients contained in the set can be appropriately used together at the time of use.

### <3> Method of the present invention

In the present invention, cheese can be reformed by using the active ingredients (namely, the oxidizing agent, iron containing yeast ingredient, transglutaminase, and calcium ingredient (transglutaminase and calcium ingredient are included only when they are used)). Specifically, by producing cheese with treating a milk raw material with the active ingredients, reformed cheese can be obtained. That is, the method of the present invention is a method for reforming cheese comprising treating a milk raw material with the active ingredients. An embodiment of the method of the present invention is a method for producing cheese comprising treating a milk raw material with the active ingredients. To "treat a milk raw material with the active ingredients" is also expressed as to "allow the active ingredients to act on a milk raw material". The step of "treating a milk raw material with the active ingredients" is also referred to as "reforming step".

To the mode of use of the active ingredients in the method of the present invention, the descriptions concerning the mode of use of the active ingredients for the preparation can be *mutatis mutandis* applied. That is, the method of the present invention is specifically a method for reforming cheese comprising treating a milk raw material with the oxidizing agent and the iron containing yeast. The method of the present invention may or may not further comprise treating the milk raw material with a transglutaminase. The method of the present invention may or may not further comprise treating the milk raw material with the calcium ingredient.

In the present invention, for example, by treating a milk raw material with the preparation, the milk raw material can be treated with the active ingredients. That is, the method of the present invention is be a method for producing cheese, which comprises treating a milk raw material with the preparation.

The cheese to be produced can be produced from a milk raw material by the same method as that for usual cheese production except that the milk raw material is treated with the active ingredients. That is, the method of the present invention may comprise such a step of producing cheese to be described later.

The milk raw material is a food raw material containing a milk protein. The milk raw material is not particularly limited, so long as cheese can be produced from it by the method of the present invention. Examples of the milk protein include casein and milk serum proteins (whey proteins). Examples of the milk serum proteins include α-lactalbumin and β-lactoglobulin. The milk raw material may contain, for example, one or more kinds of these milk proteins, or all of these proteins. It is preferred that the milk raw material contains at least casein. The contained amount (concentration) of the milk proteins in the milk raw material can be measured by, for example, measuring nitrogen by the Kjeldahl method, and multiplying the nitrogen amount by the protein conversion coefficient. Examples of the milk raw material include cow milk, goat milk, sheep milk, buffalo milk, reindeer milk, burro milk, and camel milk. The milk raw material may be or may not be fresh milk (original milk). The milk raw material may be or may not be subjected to, for example, such a treatment as heat treatment and homogenization. For example, the ingredients of the milk raw material may be or may not be adjusted. The milk raw material may be, for example, whole milk, skimmed milk, partially skimmed milk, milk serum (whey), cream, buttermilk, processed product of these, ingredient-adjusted product of these, or a combination of these. Examples of the ingredient-adjusted product include, for example, calcium-enriched milk. As the milk raw material, one kind of the raw material may be used, or two or more kinds of the raw materials may be used in combination.

When the milk raw material is heat-treated, the milk raw material may be sterilized (semi-sterilized) by the heat treatment. Having been subjected to a heat treatment is also referred to as "having a heating history". The temperature of the heat treatment may be, for example, 60°C or higher, 80°C or higher, 100°C or higher, or 120°C or higher, or 150°C or lower, or within a range defined with a combination thereof. The time of the heat treatment may be, for example, 0.5 second or longer, 1 second or longer, 5 seconds or longer, or 10 seconds or longer, or 30 minutes or shorter, 5 minutes or shorter, 1 minute or shorter, 30 seconds or shorter, 15 seconds or shorter, 5 seconds or shorter, or 3 seconds or shorter, or within a range defined with a combination thereof. Examples of the heat treatment include heat treatment at a low temperature (also referred to as "low temperature heat treatment"), heat treatment at a high temperature (also referred to as "high temperature heat treatment"), and heat treatment at an ultra high temperature (also referred to as "ultra high temperature heat treatment"). Examples of the conditions for the low temperature heat treatment include the conditions for low temperature sterilization of cow milk, for example, the conditions of heating at 63 to 68°C for about 30 minutes. Examples of the conditions for the high temperature heat treatment include the conditions of high temperature sterilization of cow milk, for example, the conditions of heating at 71 to 75°C for about 15 seconds. Examples of the conditions for the ultra high temperature heat treatment include the conditions of the ultra high temperature sterilization of cow milk. The temperature of the ultra high temperature heat treatment is, for example, usually 120°C or higher, or may be preferably 120 to 150°C. The time of the ultra high temperature heat treatment is, for example, usually 0.5 to 15 seconds, or may be preferably 1 to 5 seconds, more preferably 1 to 3 seconds. The ultra high temperature heat treatment may be based on the direct heating method, or indirect heating method. The ultra high temperature heat treatment may comprise preheating. In general, the direct heating method does not comprise preheating in many cases, but the indirect heating method comprises preheating in many cases. Examples of the conditions of preheating include conditions of heating at 80 to 85°C for 1 to 5 minutes. The milk raw material subjected to the ultra high temperature heat treatment such as whole milk subjected to the ultra high temperature heat treatment may also be referred to as "ultra high temperature-sterilized milk". With a usual method for producing cheese, in particular, it is difficult or impossible to produce cheese by using ultra high temperature-sterilized milk as a raw material. However, according to the method of the present invention, cheese of good quality can be produced by using ultra high temperature-sterilized milk as a raw material.

Cheese can be produced through a curdling step. Specifically, the curdling step means a step of aggregating (coagulating) the ingredients in the milk raw materials such as milk proteins. The curdling step can be carried out by, for example, addition of a lactic acid bacterium (lactic acid fermentation), addition of a milk clotting enzyme, addition of an acid, heating, or a combination of these. For example, a lactic acid bacterium may be added to perform lactic acid fermentation, and then rennet may be added to further advance the curdling step. Examples of the lactic acid bacterium include *Lactococcus* bacteria, *Lactobacillus* bacteria, and *Bifidobacterium* bacteria. As the lactic acid bacterium, for example, those marketed as cheese starter can be used. Examples of the milk clotting enzyme include rennet and chymosin. Origin of the milk clotting enzyme is not particularly limited. The milk clotting enzyme may be one derived from any of microorganism, animal, plant, and so forth. As the milk clotting enzyme, a homologue or artificially modified enzyme of a known milk clotting enzyme may also be used. The milk clotting enzyme may also be a recombinant enzyme. Examples of the acid include vinegar and lemon juice. The time of the curdling step may be, for example, 15 minutes or longer, 30 minutes or longer, 45 minutes or longer, 1 hour or longer, 2 hours or longer, or 3 hours or longer, or 10 hours or shorter, or within a range defined with a combination thereof. As a result of the curdling step, aggregates (cheese curd) are produced. By separating the cheese curd from the milk serum (whey) and collecting them, fresh cheese can be obtained. The separation step can be carried out by, for example, chopping, stirring, compression, natural separation (separation by gravity), or a combination of these. The collected cheese curd (fresh cheese) may be further subjected to such a step as molding, salting, drying, and maturing. Through a maturing step, mature cheese can be obtained. By heat-melting the natural cheese obtained as described above (fresh cheese and mature cheese), processed cheese can be produced. By using cheese as a raw material, foods and drinks containing cheese such as cheese foods can be produced.

The active ingredients may be made to act on the milk raw material at any stage of the production process of cheese so long as the cheese reforming effect is obtained. By making the active ingredients as they are or a solution thereof prepared as required coexist with the milk raw material, they can be allowed to act on the milk raw material. For example, the active ingredients may be added to a milk raw material, or a milk raw material may be mixed with a treatment solution containing the active ingredients. Such operations for making the active ingredients coexist with a milk raw material are henceforth also generically referred to as "addition" of the active ingredients. Order of the active ingredients to be allowed to act on a milk raw material is not particularly limited. The active ingredients may be allowed to act on a milk raw material by simultaneously adding all the active ingredients to the milk raw material, or by adding them separately as each of them or as an arbitrary combination of them, to the milk raw material. The active ingredients are preferably added before completion of the curdling step. The active ingredients may be added, for example, simultaneously with the lactic acid bacterium, or before or after the addition of the lactic acid bacterium. The active ingredients may be added, for example, simultaneously with rennet, or before or after the addition of rennet. Treatment with the preparation can also be carried out in a similar manner.

Conditions for performing the reforming step of the method are not particularly limited so long as the cheese reforming effect can be obtained. The conditions for performing the reforming step of the method can be appropriately set according to various conditions such as types and addition amounts of the active ingredients, and type of the milk raw material. For example, when an oxidase such as glucose oxidase is used, the reaction time is not particularly limited so long as it is determined so that the oxidase can act on the substrate substances. The reaction time may be very short time or very long time. The reaction time is preferably, for example, 1 minute to 24 hours, more preferably 5 minutes to 24 hours, further preferably 5 minutes to 2 hours. When an oxidase such as glucose oxidase is used, the reaction temperature is not particularly limited, so long as it is set within such a range that the oxidase maintains the activity. The reaction temperature is preferably, for example, 0 to 80°C. That is, a sufficient reaction time can be secured even while the milk raw material undergoes a usual curdling step of the cheese production process. In the method of the present invention, the cheese production process may also serve as the reforming step, or the reforming step may be separately carried out.

In the method of the present invention, so long as the cheese reforming effect can be obtained, ingredient other than the milk raw material and the active ingredients may also be used. Examples of such an ingredient include raw materials usually used for the cheese production other than the milk raw material. To such an ingredient, the descriptions mentioned for the ingredient other than the active ingredients in the explanations of the preparation of the present invention can be *mutatis mutandis* applied.

The quantitative ratio of the milk raw material to all the raw materials (all the ingredients) used in the method of the present invention is not particularly limited so long as cheese can be produced by the method of the present invention. The quantitative ratio of the milk raw material to all the raw materials (all the ingredients) used in the method of the present invention may be, for example, 50% (w/w) or higher, 70% (w/w) or higher, 90% (w/w) or higher, 95% (w/w) or higher, or 99% (w/w) or higher.

The addition amounts and addition amount ratios of the ingredients used in the method of the present invention (namely, the active ingredients and other ingredient(s) as required) are not particularly limited so long as the cheese reforming effect can be obtained. The addition amounts and addition amount ratios of the ingredients used in the method of the present invention can be appropriately determined according to various conditions such as conditions for performing the reforming step, and type of the milk raw material.

When an oxidase such as glucose oxidase is used as the active ingredient, the addition amount of the oxidase is, for example, preferably 0.05 to 200 U, more preferably 0.1 to 100 U, still more preferably 0.5 to 20 U, per 1 g of milk proteins.

The addition amount of the iron containing yeast is, for example, preferably 0.00003 to 0.03 g, more preferably 0.0003 to 0.03 g, in terms of dry weight per 1 g of the milk raw material. When an oxidase such as glucose oxidase and an iron-containing yeast are used as the active ingredients, the addition amount of the iron containing yeast is, for example, preferably 0.0000000015 to 1.5 g, more preferably 0.00000015 to 0.015 g, in terms of dry weight per 1 U of the oxidase.

When a transglutaminase is used as the active ingredient, the addition amount of the transglutaminase is, for example, preferably 0.00033 to 33 U, more preferably 0.0033 to 3.3 U, per 1 g of milk proteins. When an oxidase and a transglutaminase are used as the active ingredients, the addition amount of the transglutaminase is, for example, preferably 0.001 to 1000 U, more preferably 0.01 to 100 U, per 1 U of the oxidase.

When a calcium ingredient such as calcium chloride is used as the active ingredient, the addition amount of the calcium ingredient is, for example, preferably 0.001 to 1 g, more preferably 0.01 to 1 g, still more preferably 0.03 to 0.5 g, per 1 g of the milk raw material. When an oxidase and a calcium ingredient are used as the active ingredients, the addition amount of the calcium ingredient is, for example, preferably 0.000005 to 50 g, more preferably 0.00005 to 5 g, per 1 U of the oxidase.

In the method of the present invention, for example, a substrate of the oxidase such as glucose and lactose may be used in combination. By using an oxidase and a substrate thereof in combination, it can be expected that cheese can be reformed with a smaller amount of the enzyme compared with the case of adding only the oxidase, and therefore the addition amount of the oxidase can be reduced. In particular, when the contained amount of a substrate of the oxidase such as glucose and lactose in the milk raw material is low, it is effective to add the substrate of the oxidase. When ordinary cow milk is used as the milk raw material, the addition amount of glucose may be, for example, preferably 0.00001 to 0.1 g, more preferably 0.0001 to 0.01 g, per 1 g of the milk raw material.

### Examples

### <Example 1>

Ultra high temperature-sterilized milk (1021 g, heat-treated at 130°C for 2 seconds, Koshin Milk Products) and low temperature-sterilized milk (1021 g, heat-treated at 66°C for 30 minutes, Takanashi Milk Products) were each kept warm at 35°C for 30 minutes in an incubator. Then, 1 ml of a solution obtained by suspending a lactic acid bacterium R-707 (0.3541 g, Chr. Hansen Japan) in 10 ml of milk was added to each milk, and the mixture was left standing at 35°C for 60 minutes. Then, a glucose oxidase, glucose, and metal-containing yeast were added in the addition amounts shown in Table 1, and 0.5 ml of a solution obtained by dissolving rennet CHY-MAX (0.2 g, Chr. Hansen Japan) in 5 ml of water was immediately added to start curdling. "Sumizyme PGO" (Shin Nippon Kagaku Industry, henceforth also referred to as "GO") was used as the glucose oxidase, and "Iron-containing yeast" (iron content 5 weight %, Sceti, henceforth also referred to as "iron yeast") was used as the metal-containing yeast. In drawings and tables, "U/gp" used for GO means the GO activity (U) per 1 g of milk proteins. After the curdling for 3 hours, the produced cheese curd was cut in width and length of 2 cm with a metal skewer to promote discharge of whey. Then, the cheese curd was moved on a strainer having a stretched net, and discharge of whey was allowed at room temperature for 3 hours. The discharge of whey was allowed with reversing the upper and lower sides of the cheese curd every 30 minutes so that whey is uniformly discharged by the gravity. After the discharge of whey, the cheese curd was moved to an incubator at a temperature of 22°C and humidity of 50%, and left standing for 15 hours to obtain cheese.

### [Table 1]

**Table 1**

| No. | Milk raw material | Test group | GO (U/gp) | Glucose % based on milk | Iron yeast % based on milk |
|---|---|---|---|---|---|
| #1 | Low temperature-sterilized milk | Additive-free | 0 | 0 | 0 |
| #2 | Ultra high temperature-sterilized milk | Additive-free | 0 | 0 | 0 |
| #3 | | GO, glucose | 12 | 0.168 | 0 |
| #4 | | Iron yeast | 0 | 0 | 0.012 |
| #5 | | GO, glucose, iron yeast | 12 | 0.168 | 0.012 |

Yield of the obtained cheese (measured weight (g)/1021 (g) x 100 (%)) was calculated. After the obtained cheese was equally divided into four pieces, and cut in a width of 2 cm, a physical property thereof was evaluated by using a texture analyzer (TA-XT2i, Eko Instruments). As the physical property, "breaking strength" serving as an index of "hardness" of cheese was measured. Further, in order to confirm flavor and mouthfeel of the obtained cheese, "hardness" of the cheese was evaluated by organoleptic evaluation performed by a panel of five persons, and graded with scores ranging from 0 to 5 with increments of 0.5. The "hardness" was defined as strength of stress sensed by teeth at the time of biting the cheese. As for the organoleptic evaluation score, "score 5" means very strong, "score 4" means considerably strong, "score 3" means moderately strong, "score 2" means slightly weak, and "score 1" means weak. The results are shown as averages of the scores given by the five persons of the panel. Further, comments are mentioned for flavor, taste, color, and others.

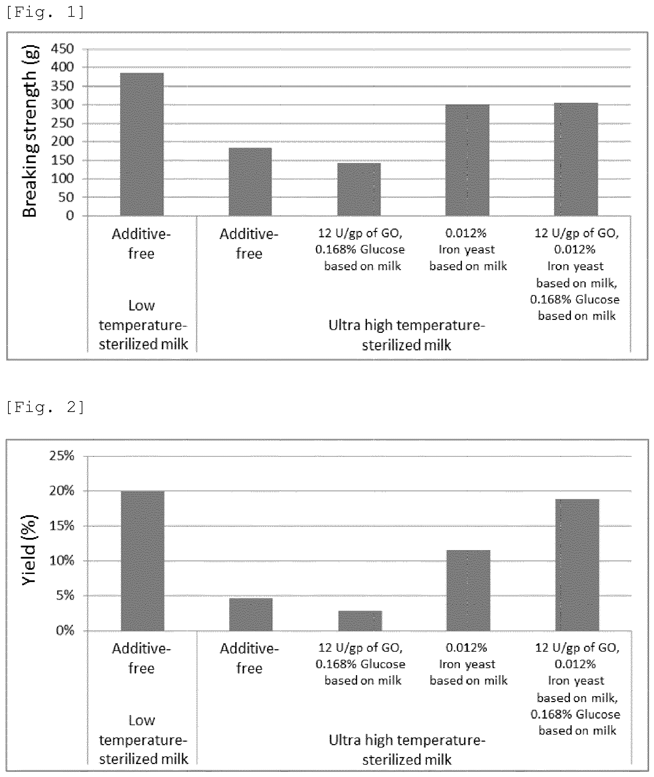

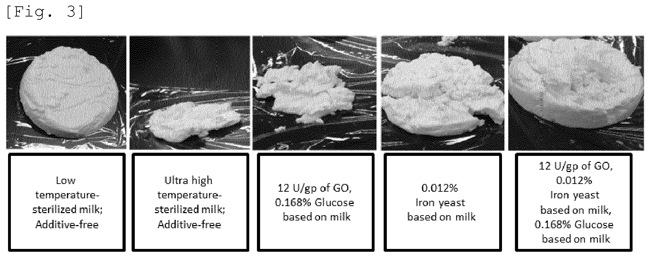

There are shown the measurement results of the physical property in Fig. 1, the measurement results of the yield in Fig. 2, photographs of the obtained cheeses in Fig. 3, and the organoleptic evaluation results in Table 2. When the low temperature-sterilized milk was used, cheese showing a breaking strength of 300 g or higher and a yield of about 19% was obtained, and good results were also obtained in the organoleptic evaluation. On the other hand, when the ultra high temperature-sterilized milk was used, the additive-free product showed low breaking strength and yield, and thus favorable cheese could not be obtained. Also when GO alone was added to the ultra high temperature-sterilized milk, breaking strength and yield were low, and favorable cheese could not be obtained. When the metal-containing yeast alone was added to the ultra high temperature-sterilized milk, breaking strength was sufficiently improved to about 300 g, but yield was low. When the ultra high temperature-sterilized milk was used, all the additive-free product, GO alone-added product, and iron-containing yeast alone-added product had a serious problem that the cheese showed bad moldability, and was easily broken. On the other hand, when GO and the iron-containing yeast were added in combination to the ultra high temperature-sterilized milk, the breaking strength was sufficiently improved to about 300 g, the yield was also markedly improved to a value equivalent to that obtained by using the low temperature-sterilized milk, and larger cheese was obtained than that obtained by using the low temperature-sterilized milk. As described above, it has become clear that, according to the present invention, cheese can be reformed, and even when ultra high temperature-sterilized milk is used, cheese of good quality equivalent to that of the cheese produced by using low temperature-sterilized milk can be obtained.

### [Table 2]

**Table 2**

| Milk raw material | Test group | Evaluation item | |
|---|---|---|---|
| | | Hardness (score) | Others (taste, moldability) |
| Low temperature-sterilized milk | Additive-free | 4.0 | - Strong milk flavor |
| | | | - Good moldability |
| Ultra high temperature-sterilized milk | Additive-free | 1.5 | - Weak milk flavor |
| | | | - Bad moldability |
| | 12 U/gp of GO, 0.168% Glucose based on milk | 1.0 | - Almost no milk flavor, and wateriness |
| | | | - Extremely bad moldability |
| | 0.012% Iron yeast based on milk | 3.0 | - Still stronger milk flavor |
| | | | - Bad moldability |
| | 12 U/gp of GO, 0.012% Iron yeast based on milk, 0.168% Glucose based on milk | 3.0 | - Still stronger milk flavor |
| | | | - Good moldability |

### <Example 2>

In the same manner as that of Example 1, cheeses were produced by using the compositions shown in Tables 4 to 6, and the obtained cheeses were evaluated. In Tables 4 to 6, "GO" means the glucose oxidase preparation "Sumizyme PGO" (Shin Nippon Kagaku Industry), "TG" means the transglutaminase preparation "Activa TG" (Ajinomoto), and "U/gp" mentioned for GO and TG means enzyme activity (U) per 1 g of milk proteins. The organoleptic evaluation criteria are shown in Table 3. The organoleptic evaluation was performed by choosing a score from the range of 5 to 1 with increments of 0.5. The target values or scores of the qualities of cheese were 250 (g) for breaking strength, 19.8 (%) for yield (amount of formed curd based on milk), 3.0 (evaluation score) for mouthfeel, 3.0 (evaluation score) for milk taste and flavor.

### [Table 3]

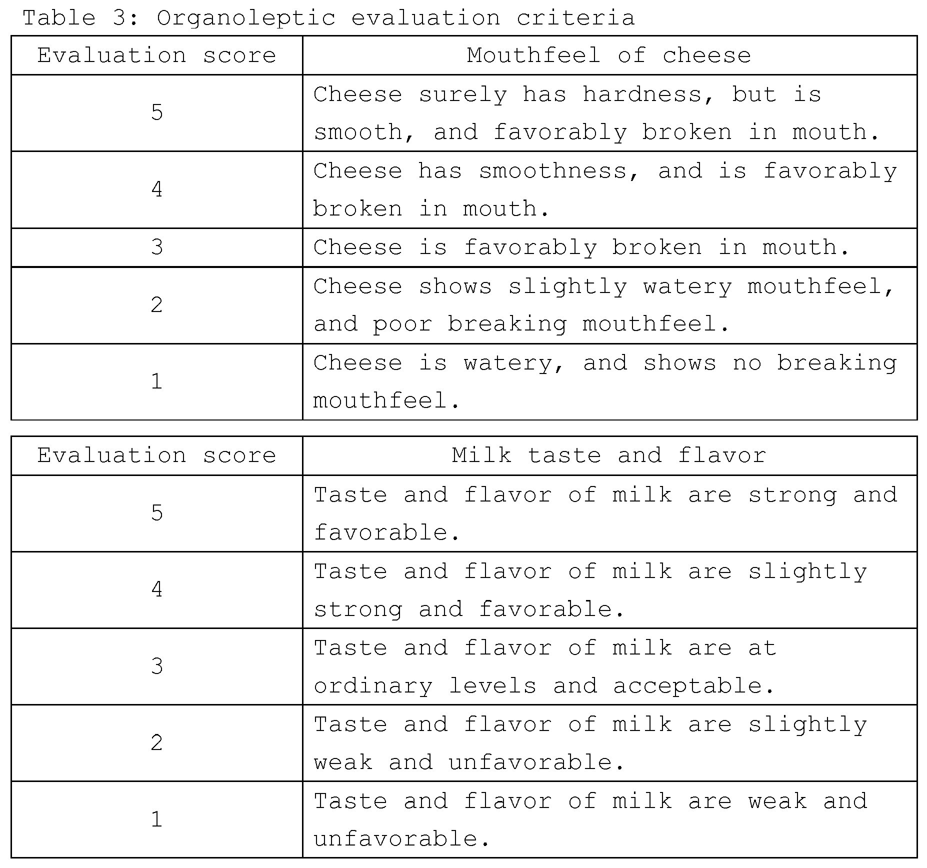

### <1> Production of cheese from low temperature-sterilized milk

The compositions and the results are shown in Table 4. The data for the composition of #1-1 mentioned in Table 4 are the same as the data of <Example 1>. When the low temperature-sterilized milk was used, use of GO and the iron-containing yeast provided improvement in the quality of cheese.

### [Table 4]

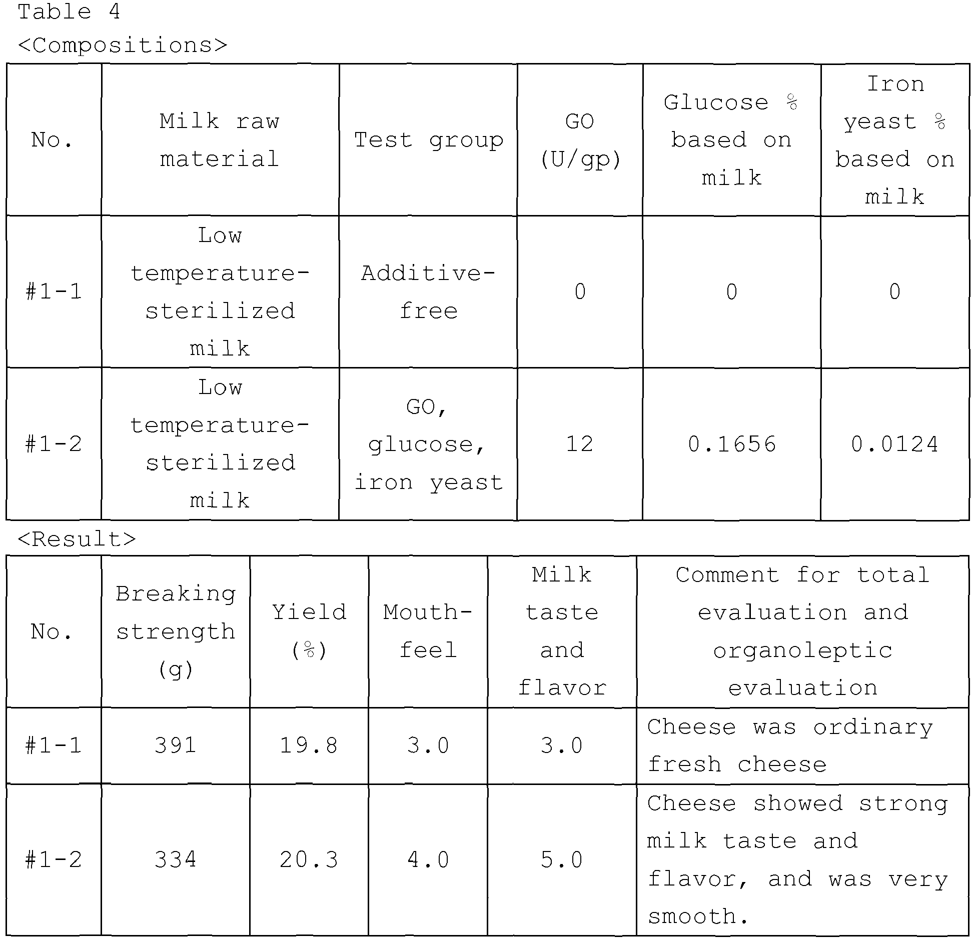

### <2> Production of cheese from ultra high temperature-sterilized milk (1)

The compositions and the results are shown in Table 5. The data for compositions mentioned in Table 5 are the same as the data of <Example 1>. When the ultra high temperature-sterilized milk was used, use of GO and the iron-containing yeast provided improvement in the quality of cheese.

### [Table 5]

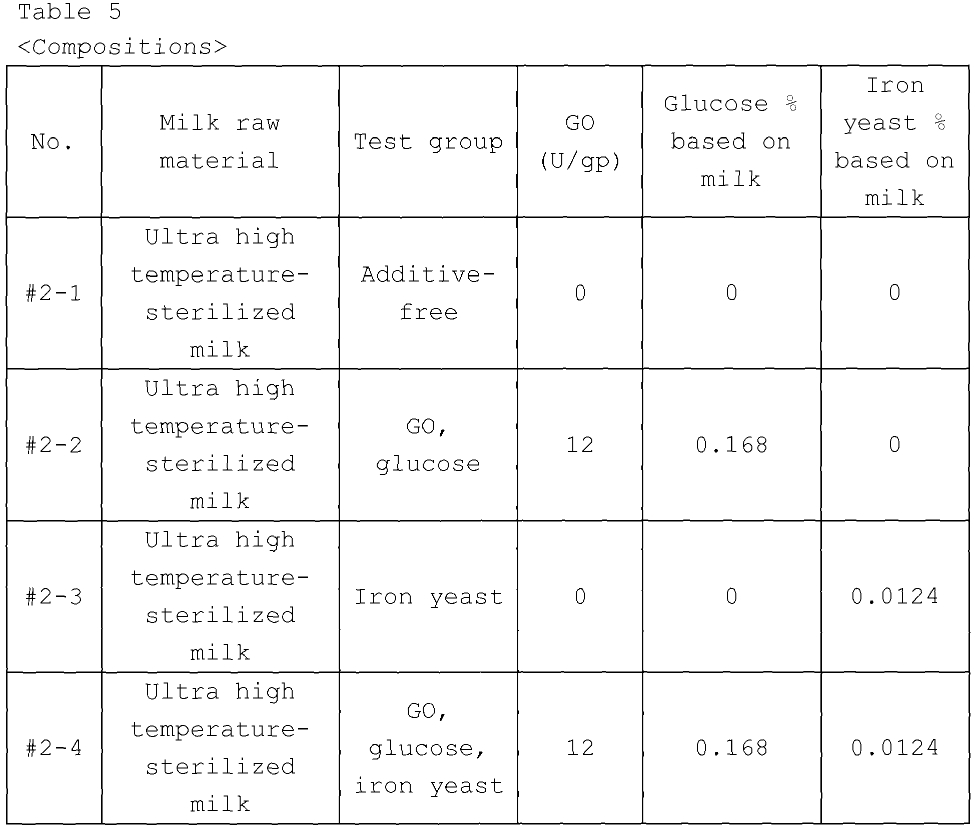

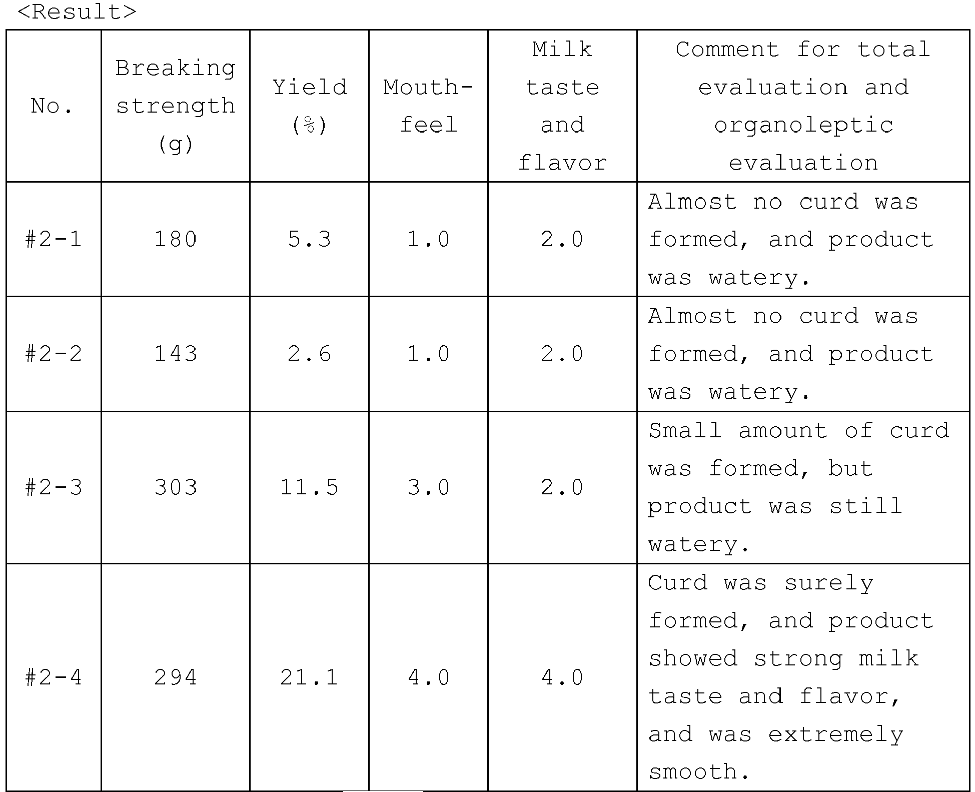

### <3> Production of cheese from ultra high temperature-sterilized milk (2)

The compositions and the results are shown in Table 6. When the ultra high temperature-sterilized milk was used, use of GO and the iron-containing yeast in combination with TG and/or calcium chloride provided improvement in the quality of cheese.

### [Table 6]

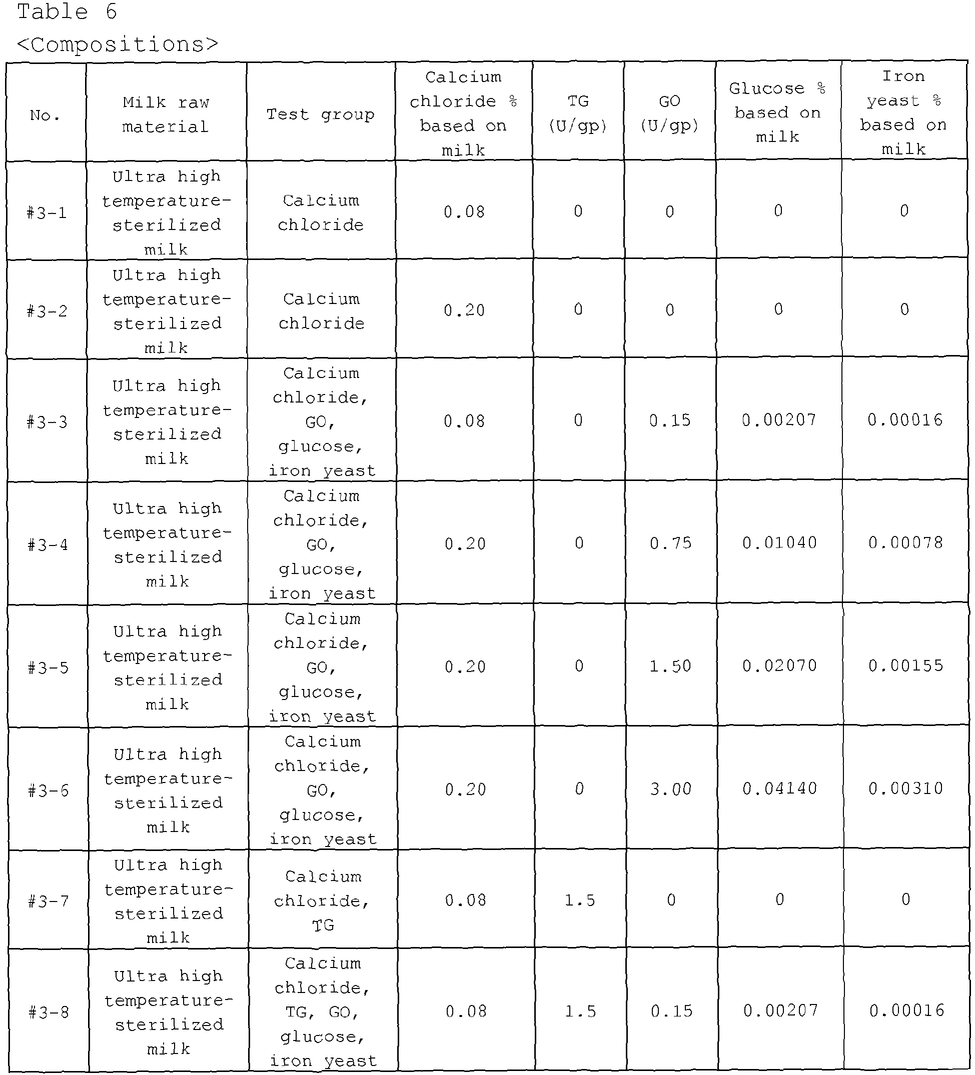

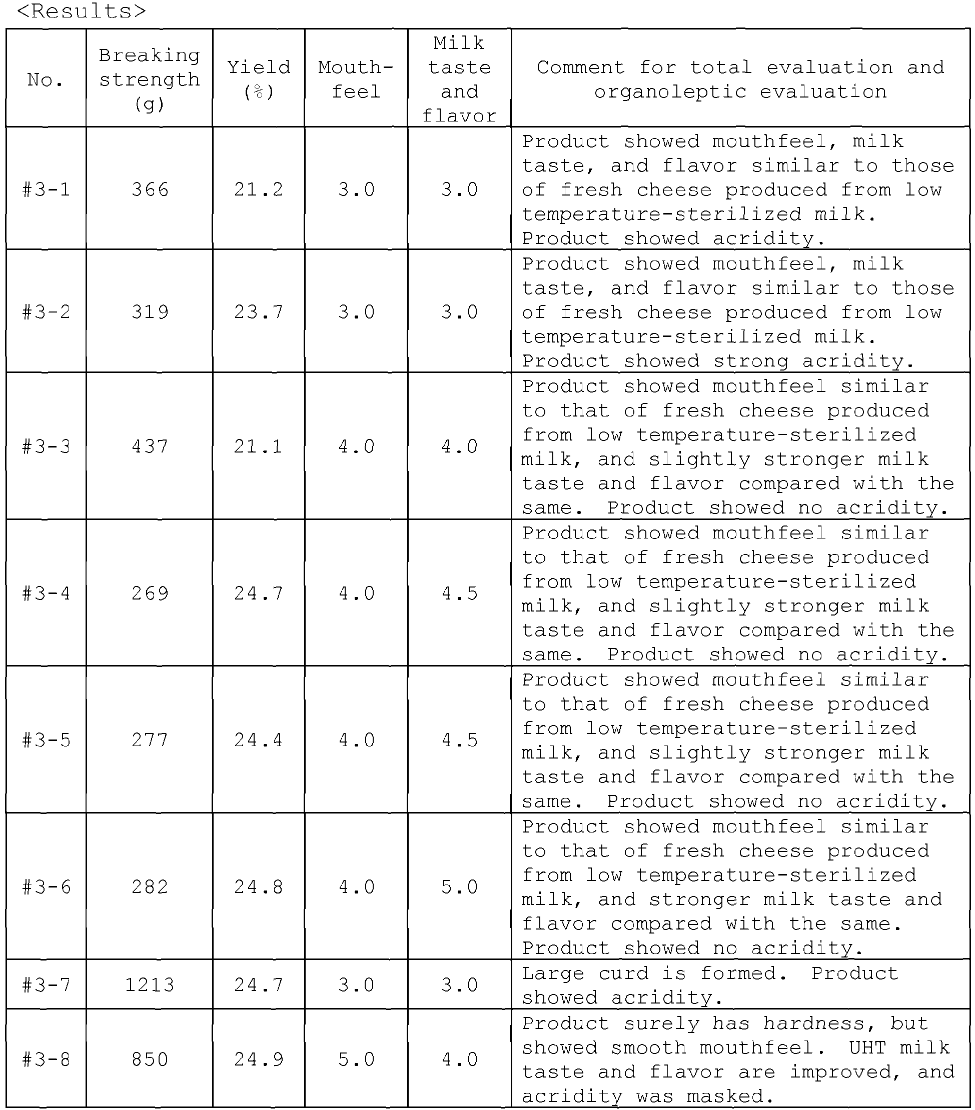

### Industrial Applicability

According to the present invention, cheese can be reformed. According to the present invention, cheese of good quality can be produced especially from a milk raw material subjected to such a heat treatment as ultra high temperature sterilization. Therefore, the present invention is extremely useful in the field of food industry.

## Claims

1. A method for producing cheese, the method comprising:
treating a food raw material containing a milk protein with an oxidase and an iron-containing yeast.

2. The method according to claim 1, wherein the food raw material consists of one or more kinds of raw materials selected from whole milk, skimmed milk, partially skimmed milk, milk serum, cream, buttermilk, a processed product thereof, and an ingredient-adjusted product thereof.

3. The method according to claim 1 or 2, wherein the oxidase consists of one or more kinds of enzymes selected from a lactose oxidase and a glucose oxidase.

4. The method according to any one of claims 1 to 3, wherein 0.05 to 200 U of the oxidase is added per 1 g of the milk protein.

5. The method according to any one of claims 1 to 4, wherein 0.00003 to 0.03 g of the iron-containing yeast in terms of dry weight is added per 1 g of the food raw material.

6. The method according to any one of claims 1 to 5, which further comprises processing the food raw material with a transglutaminase and/or a calcium salt.

7. The method according to any one of claims 1 to 6, wherein the food raw material is a heat-treated food raw material containing a milk protein.

8. The method according to any one of claims 1 to 7, wherein the food raw material is a food raw material heat-treated at a temperature of 120°C or higher for 0.5 to 15 seconds.

## Patentansprüche

1. Verfahren zur Herstellung von Käse, wobei das Verfahren umfasst:
Behandeln eines Lebensmittelrohstoffs, der ein Milchprotein enthält, mit einer Oxidase und einer eisenhaltigen Hefe.

2. Verfahren nach Anspruch 1, wobei der Lebensmittelrohstoff aus einer oder mehreren Arten von Rohstoffen besteht, die aus Vollmilch, Magermilch, teilentrahmter Milch, Milchserum, Sahne, Buttermilch, einem verarbeiteten Produkt davon und einem bezüglich der Inhaltsstoffe angepassten Produkt davon ausgewählt sind.

3. Verfahren nach Anspruch 1 oder 2, wobei die Oxidase aus einer oder mehreren Arten von Enzymen besteht, die aus einer Lactoseoxidase und einer Glucoseoxidase ausgewählt sind.

4. Verfahren nach einem der Ansprüche 1 bis 3, wobei 0,05 bis 200 U der Oxidase pro 1 g des Milchproteins zugesetzt werden.

5. Verfahren nach einem der Ansprüche 1 bis 4, wobei 0,00003 bis 0,03 g der eisenhaltigen Hefe, ausgedrückt als Trockengewicht, pro 1 g des Lebensmittelrohstoffs zugesetzt werden.

6. Verfahren nach einem der Ansprüche 1 bis 5, **dadurch gekennzeichnet, dass** der Lebensmittelrohstoff mit einer Transglutaminase und/oder einem Calciumsalz verarbeitet wird.

7. Verfahren nach einem der Ansprüche 1 bis 6, wobei der Lebensmittelrohstoff ein wärmebehandelter Lebensmittelrohstoff ist, der ein Milchprotein enthält.

8. Verfahren nach einem der Ansprüche 1 bis 7, wobei der Lebensmittelrohstoff ein Lebensmittelrohstoff ist, der 0,5 bis 15 Sekunden bei einer Temperatur von 120°C oder höher wärmebehandelt wird.

## Revendications

1. Procédé de production de fromage, le procédé comprenant:
le traitement d'une matière première alimentaire contenant une protéine de lait avec une oxydase et une levure contenant du fer.

2. Procédé selon la revendication 1, dans lequel la matière première alimentaire consiste en une ou plusieurs sortes de matières premières sélectionnées parmi le lait entier, le lait écrémé, le lait partiellement écrémé, le lactosérum, la crème, le babeurre, un produit traité de ceux-ci et un produit ajusté en ingrédients de ceux-ci.

3. Procédé selon la revendication 1 ou 2, dans lequel l'oxydase consiste en une ou plusieurs sortes d'enzymes sélectionnés parmi une oxydase de lactose et une oxydase de glucose.

4. Procédé selon l'une quelconque des revendications 1 à 3, dans lequel entre 0,05 U et 200 U de l'oxydase sont ajoutés par 1 g de la protéine de lait.

5. Procédé selon l'une quelconque des revendications 1 à 4, dans lequel entre 0,00003 g et 0,03 g de la levure contenant du fer en termes de masse sèche est ajouté par 1 g de la matière première alimentaire.

6. Procédé selon l'une quelconque des revendications 1 à 5, qui comprend en outre le traitement de la matière première alimentaire avec une transglutaminase et/ou un sel de calcium.

7. Procédé selon l'une quelconque des revendications 1 à 6, dans lequel la matière première alimentaire est une matière première alimentaire traitée thermiquement qui contient une protéine de lait.

8. Procédé selon l'une quelconque des revendications 1 à 7, dans lequel la matière première alimentaire est une matière première alimentaire traitée thermiquement à une température de 120°C, ou plus, pendant 0,5 à 15 secondes.
